# EUROPÄISCHE PATENTSCHRIFT

(11) **EP 2 051 267 B1**
(45) Veröffentlichungstag und Bekanntmachung des Hinweises auf die Patenterteilung: **28.03.2012**
(21) Anmeldenummer: 07020108.2
(22) Anmeldetag: 15.10.2007
(51) Int. Cl.: H01H 13/04, H01H 13/14, B60Q 1/14, H05F 3/02

(54) **Elektrische Schalteinrichtung in einem Kraftfahrzeug mit einer ESD Schutzvorrichtung**
Electric switchgear in a motor vehicle with an ESD protection device
Dispositif de commutation électrique dans un véhicule automobile doté d'un dispositif de protection ESD

(43) Veröffentlichungstag der Anmeldung: 22.04.2009
(73) Patentinhaber: Delphi Technologies, Inc., Troy, MI 48007 (US)
(72) Erfinder: Grundmeier, Jürgen, 55595 Argenschwang (DE)
(74) Vertreter: Robert, Vincent

(56) Entgegenhaltungen:
- WO-A-2004/065926
- US-A- 5 283 710
- US-A- 5 408 062
- US-B1- 6 421 221

## Beschreibung

Die Erfindung bezieht sich auf eine elektrische Schalteinrichtung für ein Kraftfahrzeug mit einem Gehäuse und/oder einem Betätigungselement und einer ESD-Schutzvorrichtung, die durch ein geerdetes elektrisch leitfähiges Gehäuse und/ oder Betätigungselement realisiert ist.

Eine derartige Schalteinrichtung ist aus der US-A-5 408 062 bekannt.

Moderne Kraftfahrzeuge verfügen über eine große Anzahl an elektrischen oder elektronischen Schalteinrichtungen, die von einem Nutzer zur Ansteuerung einer gewünschten Funktion betätigt werden. Bekannt sind beispielsweise Druckschalter, Wippenschalter oder dergl. am Armaturenbrett des Kraftfahrzeugs sowie an Lenkstock- bzw. Lenkradschaltern, um beispielsweise einen Fahrtrichtungsanzeiger oder eine Scheibenwaschanlage anzusteuern. Wird eine solche Schalteinrichtung betätigt, wird üblicherweise ein elektrischer Stromkreis geschlossen bzw. ein entsprechendes Steuersignal an ein entsprechendes Steuergerät des Kraftfahrzeugs weitergeleitet, das wiederum die eigentliche gewünschte Funktion ansteuert.

Dabei tritt häufig das Problem auf, dass der Nutzer bzw. dessen Fingerspitze elektrostatisch aufgeladen ist und sich diese elektrische Ladung beim Berühren der Schalteinrichtung auf diese überträgt. Dabei kann es zu einer elektrostatischen Entladung (englisch: electrostatic discharge, kurz: ESD) kommen. Selbst bei einem elektrisch isolierenden Material, beispielsweise einer Kunststoffoberfläche der elektrischen Schalteinrichtung, kann ein Funke entstehen, der durch das Material durchschlägt und in der Schalteinrichtung einen kurzen, aber hohen elektrischen Stromimpuls hervorruft. Besonders bei empfindlichen elektrischen oder elektronischen Schalteinrichtungen kann dies zu einer Beschädigung führen.

Zum Schutz von elektrischen Schalteinrichtungen sind verschiedene Lösungen bekannt. Die DE 10 2004 027 278 A1 beschreibt eine Schutzschaltung mit einem Halbleitersubstrat, wobei in dem Halbleitersubstrat aktive Bauelemente enthalten sind, wie beispielsweise Transistoren. Die DE 10 2005 027 368 A1 offenbart eine Halbleiterschutzstruktur für eine elektrostatische Entladung mit zwei Bipolartransistoren, zwischen denen die elektrostatische Ladung hin und hergeleitet wird, um diese abzubauen. Schließlich ist aus der DE 10 2004 052 093 A1 eine Schaltungsanordnung bekannt, die aus zwei Abschnitten mit jeweils einer eigenen Betriebsspannung und einem Transistor besteht. Diese Lösungen sind jedoch insofern nachteilig, als sie einen erheblichen schaltungstechnischen Aufwand erfordern und die Einleitung der elektrostatischen Ladung in die Schaltung selbst ebenfalls nicht zuverlässig gewährleistet ist.

Im Weiteren ist es aus der Praxis bekannt, eine ESD-Schutzvorrichtung durch ein Labyrinth im Spaltbereich zwischen einem Betätigungselement und einem Gehäuse von Schalteinrichtungen auszubilden, wobei das Labyrinth ein Durchschlagen eines Funken in das Innere der Schalteinrichtung verhindern soll.

Es ist Aufgabe der Erfindung, eine elektrische Schalteinrichtung der eingangs genannten Art zu schaffen, die einen verbesserten Schutz gegen elektrostatische Entladung bietet und dennoch einen einfachen Aufbau aufweist.

Erfindungsgemäß wird die Aufgabe dadurch gelöst, dass dem Gehäuse und/oder Betätigungselement über einen definierten Luftspalt eine Erdung zugeordnet ist.

Ein Gedanke der Erfindung besteht darin, an einer Oberfläche der elektrischen Schalteinrichtung ein elektrisch leitfähiges Element vorzusehen, insbesondere ein metallisches Element. Selbstverständlich kann es sich auch um ein beispielsweise aus einem Kunststoff gefertigtes Element mit einer metallisierten, also elektrisch leitfähigen Oberfläche handeln. Üblicherweise ist eine Oberfläche einer elektrischen Schalteinrichtung durch Kunststoffbauteile, insbesondere ein Gehäuse sowie mindestens ein darin gelagertes Betätigungselement, gebildet, wodurch sich eine elektrische Ladung an einer Fingerspitze des Nutzers aufgrund der höheren elektrischen Leitfähigkeit stets an das metallische Element übertragen wird und nicht die Kunststoffoberfläche durchschlägt. Zusätzlich ist an oder in der elektrischen Schalteinrichtung eine Erdung vorgesehen, über die die elektrische Ladung gezielt abgeführt wird. Daher ist eine Beschädigung der eigentlichen elektrischen oder elektronischen Schalteinrichtung wirkungsvoll vermieden, da die Ladung nicht in einen empfindlichen Schaltkreis der elektrischen Schalteinrichtung eingeleitet wird. Die Erdung, die bevorzugt wie im Folgenden beschrieben ausgebildet wird, ist über einen definierten Luftspalt von dem metallischen Element getrennt, wobei insbesondere die Breite dieses Luftspalts in Abhängigkeit der Größe der zu erwartenden elektrischen Ladung, die auf das Element übertragen wird, vom Fachmann gewählt wird. An diesem Luftspalt ist der Abstand zwischen der Erdung und dem metallischen Element am geringsten, so dass die elektrische Ladung definiert vom metallischen Element über den Luftspalt auf die Erdung überspringt und zwar nur an diesem Luftspalt.

Dadurch, dass eine elektrische Ladung an einer Fingerspitze des Nutzers nicht unkontrolliert die Kunststoffoberfläche durchschlägt, sondern definiert von dem leitfähigen Gehäuse bzw. Betätigungselement über den Luftspalt auf die Erdung überspringt, ist eine Beschädigung der eigentlichen elektrischen oder elektronischen Schalteinrichtung wirkungsvoll vermieden. Alternativ ist dem Gehäuse und/oder Betätigungselement über einen definierten Luftspalt eine Erdung zugeordnet.

In Ausgestaltung sind dem Kunststoff des Gehäuses und/oder des Betatigungselementes Kohlenstoffnanoröhren beigemischt. Kohlenstoffnanoröhren, auch CNT (carbon nanotubes) genannt, sind makroskopisch kleine röhrenförmige Gebilde zur Verbesserung der mechanischen und elektrischen Eigenschaften von Kunststoffen.

Nach einer Weiterbildung ist die Erdung durch ein mechanisches Labyrinth gebildet, in dem die elektrische Ladung hin und her lauft und dadurch abgebaut wird. Eine solche mechanische Lesung kann insbesondere unter Verwendung von Kohlenstcffnanorohren ausgebildet werden, um die elektrische Ladung langsam abzubauen. Ebenso kann ein metallisches Stanzgitter als Labyrinth dienen.

Zweckmaßigerweise ist der Luftspalt zwischen dem Element, dem Gehause und/oder dem Betätigungselement zum einen und einem geerdeten Leiter im Inneren des Gehäuses zum anderen gebildet. Das Überspringen eines Funken bzw. einer Ladung erfolgt bevorzugt zwischen zwei Leitern, weshalb der Leiter im Inneren des Gehäuses eine Art Blitzableiter darstellt, der die in die Schalteinrichtung eingeleitete Energie gezielt aufnimmt und ableitet. Vorzugsweise ist der Leiter mit einer Leiterplatte der Schalteinrichtung verbunden. Die Leiterplatte ist an Masse angeschlossen.

In einer ersten Ausführungsform ist die Erdung durch einen Anschluss des Ringes, Gehäuses und/oder Betätigungselementes und/oder des Leiters an einen Masseanschluss einer Batterie des Kraftfahrzeugs, insbesondere über die Karosserie oder dergl. metallische Bauteile, ausgeführt. D. h. es besteht eine unmittelbare Verbindung zur Karosserie des Kraftfahrzeugs. Hierzu kann der elektrische Leiter über eine entsprechende Verbindung aus der elektrischen Schalteinrichtung herausführen und an die Karosserie bzw. Masse angeschlossen sein. Im Inneren der elektrischen Schalteinrichtung ist dann der Luftspalt definierter Breite durch eine Beabstandung des Leiters von dem ringförmigen metallischen Element bzw. dem Gehäuse und/oder Betätigungselement gebildet.

Bevorzugt ist die ESD-Schutzvorrichtung durch ein metallisches oder metallisiertes Element an einer Oberfläche der Schalteinrichtung gebildet, dem über den Luftspalt die Erdung zugeordnet ist. Durch das metallische Element ist zuverlässig gewährleistet, dass keine elektrische Ladung unkontrolliert beispielsweise eine Kunststoffoberfläche der elektrischen Schalteinrichtung durchschlägt und einen Schaltkreis beschädigt. Die zusätzliche Anordnung des metallischen Elements sowie der davon über einen Luftspalt definierter Breite getrennten Erdung erfordert praktisch kaum zusätzlichen Aufwand bei der Herstellung der elektrischen Schalteinrichtung.

Vorzugsweise ist das metallische oder metallisierte Element ein Ring, der insbesondere Chrom enthält. Zweckmäßigerweise ist der Ring als ein Betätigungselement der Schalteinrichtung umgebender Zierring ausgebildet. Der Ring umgreift eine durch mindestens ein Betätigungselement gebildete Betätigungsoberfläche der Schalteinrichtung durchgehend, so dass in praktisch beliebigen Positionen eines Fingers eines Nutzers zur Betätigung der Schalteinrichtung stets sichergestellt ist, dass eine eventuelle elektrische Ladung zuverlässig in das metallische Element eingeleitet wird. Selbstverständlich ist hierzu ein Metall hoher Leitfähigkeit bevorzugt, beispielsweise kann dies in Form eines Chromrings bzw. eines verchromten Rings erfolgen, der zudem ein ansprechendes Äußeres aufweist.

In Ausgestaltung ist die Erdung durch einen Anschluss des Ringes, Gehäuses und/oder Betätigungselementes oder des Leiters an elektrische Bauteile realisiert, insbesondere Dioden und/oder Transistoren. Diese elektrischen Bauteile, wie Dioden, Transistoren oder dergl:, die innerhalb der elektrischen Schalteinrichtung angeordnet sind, können vom Fachmann derart miteinander verschaltet werden, dass eine elektrische Ladung, die über den definierten Luftspalt auf diese schaltungstechnische Erdung übergesprungen ist, ohne Beschädigung weiterer elektrischer

Komponenten der elektrischen Schalteinrichtung in der Erdung abgebaut wird.

Die zuvor beschriebene elektrische Schalteinrichtung kann zur Steuerung beliebiger Funktionen im Kraftfahrzeug herangezogen werden und beliebige Einzelschalter mit entsprechenden Betätigungselementen am Armaturenbrett des Kraftfahrzeugs umfassen. Bevorzugt ist die elektrische Schalteinrichtung als Schalthebel eines Lenkstockschalters ausgebildet. Das Betätigen des Lenkstockhebels bzw. der daran angeordneten elektrischen Schalteinrichtung durch den Nutzer ist ohne die Gefahr einer elektrostatischen Entladung möglich. Prinzipiell kann eine derartige elektrische Schalteinrichtung aber auch auf allen anderen Gebieten der Technik eingesetzt werden.

Es versteht sich, dass die vorstehend genannten und nachstehend noch zu erläuternden Merkmale nicht nur in der jeweiligen angegebenen Kombination, sondern auch in anderen Kombinationen verwendbar sind. Der Rahmen der Erfindung ist nur durch die Ansprüche definiert.

Die Erfindung wird im Folgenden an Hand eines Ausführungsbeispiels mit Bezugnahme auf die Zeichnungen näher erläutert. Es zeigt:

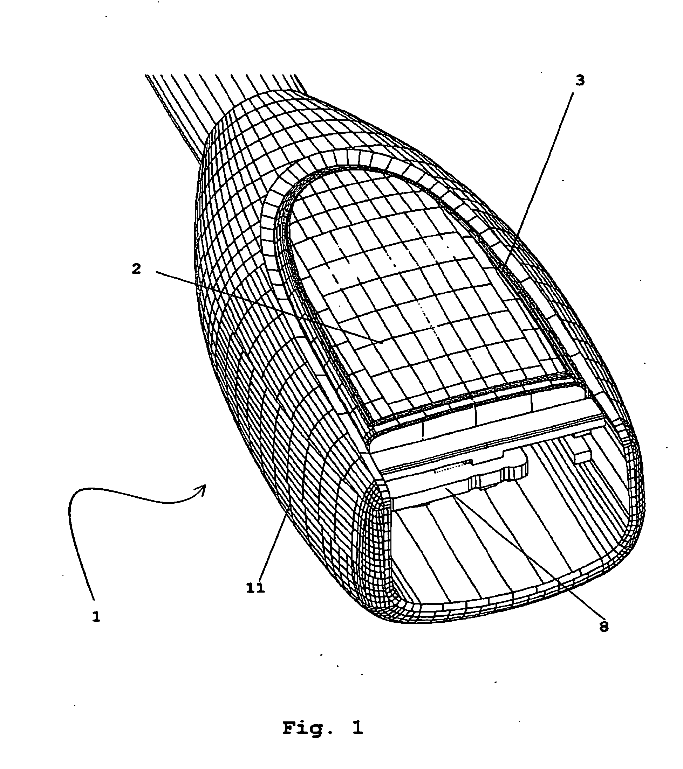

- Fig. 1: eine perspektivische Darstellung eines Schalthebels einer erfindungsgemäßen elektrischen Schalteinrich- tung mit stirnseitiger Öffnung,
- Fig.2: eine perspektivische Darstellung des Schalthebels der Schalteinrichtung nach Fig. 1 ohne Betätigungs- elemente und
- Fig.3: eine perspektivische Teildarstellung des Schalthe-
bels der Schalteinrichtung nach Fig. 1.

Der zur Ansteuerung beliebiger Funktionen dienende Schalthebel 1 der Schalteinrichtung 4 ist üblicherweise im Bereich eines Lenkrades eines Kraftfahrzeugs angeordnet und verfügt über ein in einem Gehäuse 11 gelagertes Betätigungselement 2, um beispielsweise einen Tempomat aus- und einzuschalten. Beaufschlagt ein Nutzer des Kraftfahrzeugs das aus Kunststoff bestehende Betätigungselement 2, kann sich eine elektrische Ladung von seiner. Fingerspitze über das Betätigungselement 2 an elektrische Schaltelemente 10 im Inneren des Schalthebels 1 übertragen und diese beschädigen, falls keine Schutzvorrichtung gegen eine elektrostatische Entladung (ESD) vorhanden ist.

Hierzu verfügt der Schalthebel 1 bzw. die elektrische Schalteinrichtung 4 über ein metallisches Element in Form eines verchromten Rings 3. Der Ring 3 umläuft im Wesentlichen durchgehend das Betätigungselement 2, um unabhängig von der Position der Fingerspitze stets zu gewährleisten, dass sich eine elektrische Ladung von der Fingerspitze an den Ring 3 überträgt, da dieser gegenüber Kunststoff eine höhere elektrische Leitfähigkeit aufweist.

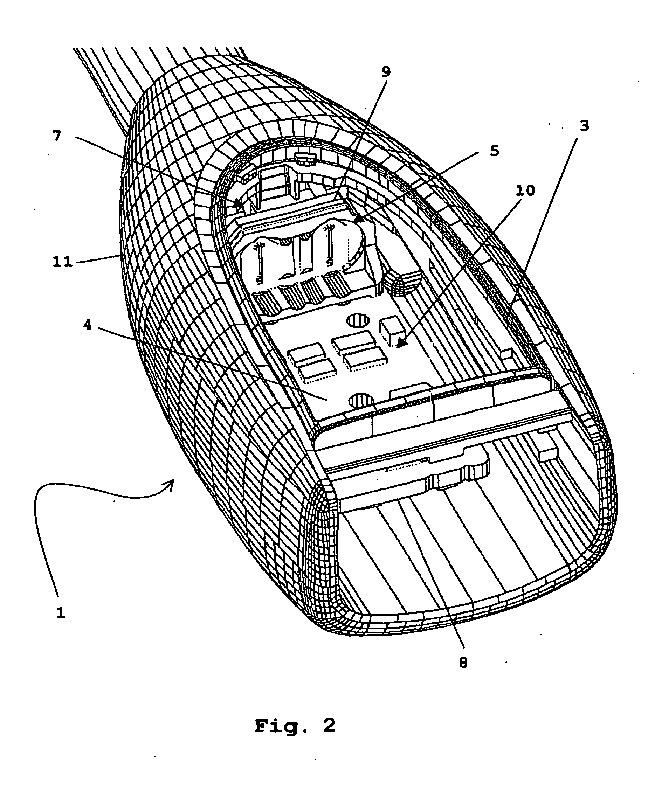

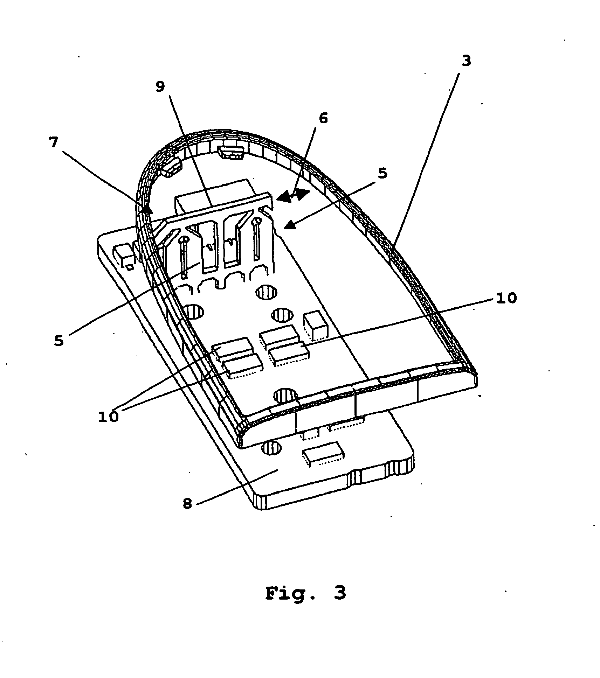

Weiterhin ist im Inneren des Schalthebels 1 bzw. der elektrischen Schalteinrichtung 4 eine Erdung 7 vorgesehen, die über einen Luftspalt definierter Breite gemäß dem Doppelpfeil 6 vom Ring 3 getrennt ist, und die einen mit einer Leiterplatte 8 der Schalteinrichtung 4 verbunden Leiter 9 umfasst. Die Erdung 7 kann durch elektrische Bauteile, wie Dioden oder Transistoren, durch einen unmittelbaren elektrischen Anschluss an die Karosserie des Kraftfahrzeugs oder, wie in Fig. 2 und 3 dargestellt, durch ein mechanisches Labyrinth 5, in dem die elektrische Ladung hin- und herläuft, bis sie abgebaut ist, gebildet sein. Das Labyrinth 5 kann durch ein metallisches Stanzgitter gebildet sein, das in die eigentliche elektrische Schalteinrichtung 4 eingegossen ist.

Durch den Luftspalt gemäß dem Doppelpfeil 6 ist gewährleistet, dass die vom Nutzer auf den Ring 3 übertragene elektrische Ladung definiert an diesem Luftspalt 6, der den kleinsten Abstand zwischen dem Leiter 9 der Erdung 7 und dem Ring 3 bildet, von diesem auf die Erdung 7 bzw. das mechanische Labyrinth 5 überspringt. Somit ist zuverlässig vermieden, dass die eigentliche elektrische Schalteinrichtung 4 mit ihren Schaltelementen 10 und ggfls. vorhandenen weiteren elektrischen/elektronischen Bauteilen durch eine elektrostatische Entladung beschädigt wird, da die elektrische Ladung vom Ring 4 über die Erdung 7 abgeführt wird.

## Patentansprüche

1. Elektrische Schalteinrichtung für ein Kraftfahrzeug mit einem Gehäuse (11) und/oder einem Betätigungselement (2) und einer ESD-Schutzvorrichtung, die durch ein geerdetes elektrisch leitfähiges Gehäuse (11) und/oder Betätigungselement (2) realisiert ist, **dadurch gekennzeichnet, dass** dem Gehäuse (11) und/oder Betätigungselement (2) über einen definierten Luftspalt eine Erdung (7) zugeordnet ist.

2. Schalteinrichtung nach Anspruch 1, **dadurch gekennzeichnet, dass** dem Kunststoff des Gehäuses (11) und/oder des Betätigungselementes (2) Kohlenstoffnanoröhren beigemischt sind.

3. Elektrische Schalteinrichtung nach Anspruch 1 oder 2, **dadurch gekennzeichnet, dass** die Erdung (7) durch ein mechanisches Labyrinth (5) gebildet ist.

4. Schalteinrichtung nach Anspruch 1, **dadurch gekennzeichnet, dass** der Luftspalt zwischen dem Element, dem Gehäuse (11) und/oder dem Betätigungselement (2) zum einen und einem geerdeten Leiter (9) im Inneren des Gehäuses (11) zum anderen gebildet ist.

5. Schalteinrichtung nach Anspruch 4, **dadurch gekennzeichnet, dass** der Leiter (9) mit einer Leiterplatte (8) der Schalteinrichtung verbunden ist.

6. Elektrische Schalteinrichtung nach Anspruch 1, **dadurch gekennzeichnet, dass** die ESD-Schutzvorrichtung durch ein metallisches oder metallisiertes Element an einer Oberfläche der Schalteinrichtung (4) gebildet ist, dem über den Luftspalt die Erdung (7) zugeordnet ist.

7. Schalteinrichtung nach Anspruch 6, **dadurch gekennzeichnet, dass** das metallische oder metallisierte Element ein Ring (3) ist und insbesondere Chrom enthält.

8. Schalteinrichtung nach Anspruch 7, **dadurch gekennzeichnet, dass** der Ring (3) als ein Betätigungselement (2) der Schalteinrichtung (4) umgebender Zierring ausgebildet ist.

9. Schalteinrichtung nach einem der Ansprüche 1 bis 8, **dadurch gekennzeichnet, dass** die Erdung (7) durch einen Anschluss des Ringes (3), Gehäuses (11) und/oder Betätigungselementes (2) und/oder des Leiters (9) an einen Masseanschluss einer Batterie des Kraftfahrzeugs, insbesondere über die Karosserie oder dergl. metallische Bauteile, ausgeführt ist.

10. Schalteinrichtung nach einem der Ansprüche 1 bis 8, **dadurch gekennzeichnet, dass** die Erdung (7) durch einen Anschluss des Ringes (3), Gehäuses (11) und/oder Betätigungselementes (2) und/oder des Leiters (9) an elektrische Bauteile realisiert ist, insbesondere Dioden und/oder Transistoren.

11. Elektrische Schalteinrichtung nach einem der Ansprüche 1 bis 10, **dadurch gekennzeichnet, dass** die elektrische Schalteinrichtung (4) als Schalthebel (1) eines Lenkstockschalters ausgebildet ist.

## Claims

1. Electrical switching device for use in a motor vehicle, having a housing (11) and/or an actuating element (2) and an anti-ESD device, wherein the anti-ESD device is realized by a grounded, electrically conductive housing (11) and/or an actuating element (2), **characterized in that** a grounding (7) is associated with the housing (11) and/or the actuating element (2) via a defined air gap.

2. Switching device of claim 1, **characterized in that** carbon nanotubes are mixed with the plastic material of the housing (11) and/or the actuating element (2).

3. Electrical switching device of claim 1 or 2, **characterized in that** the grounding (7) is formed by a mechanical labyrinth (5).

4. Switching device of claim 1, **characterized in that** the air gap is formed between the element, the housing (11) and/or the actuating element (2) on the one hand and a grounded conductor (9) inside the housing (11) on the other hand.

5. Switching device of claim 4, **characterized in that** the conductor (9) is connected to a printed circuit board (8) of the switching device.

6. Electrical switching device of claim 1, **characterized in that** the anti-ESD device is formed by a metallic or metalized element on a surface of the switching device (4), with which the grounding (7) is associated via the air gap.

7. Switching device of claim 6, **characterized in that** the metallic or metalized element is a ring (3) and contains in particular chromium.

8. Switching device of claim 7, **characterized in that** the ring (3) is formed as a decorative ring surrounding an actuating element (2) of the switching device (4).

9. Switching device of any of the claims 1 to 8, **characterized in that** the grounding (7) is constructed by a connection of the ring (3), the housing (11) and/or the actuating element (2) and/or the conductor (9) to a ground connection of a battery of the motor vehicle, in particular via the body or the like metal components.

10. Switching device of any of the claims 1 to 8, **characterized in that** the grounding (7) is realized by a connection of the ring (3), the housing (11) and/or the actuating element (2) and/or the conductor (9) to electrical components, in particular diodes and/or transistors.

11. Electrical switching device of any of the claims 1 to 10, **characterized in that** the electrical switching device (4) is formed as a switching lever (1) of a steering column switch.

## Revendications

1. Système de commutation électrique pour un véhicule automobile comprenant un boîtier (11) et/ou un élément d'actionnement (2) et un dispositif de protection contre les décharges électrostatiques, qui est réalisé par un boîtier conducteur (11) et/ou un élément d'actionnement (2) mis électriquement à la terre, **caractérisé en ce qu'**un branchement à la terre (7) et associé au boîtier (11) et/ou à l'élément d'actionnement (2) via un entrefer défini.

2. Système de commutation selon la revendication 1, **caractérisé en ce que** des nanotubes de carbone sont mélangés à la matière plastique du boîtier (11) et/ou de l'élément d'actionnement (2).

3. Système de commutation électrique selon la revendication 1 ou 2, **caractérisé en ce que** le branchement à la terre (7) est formé par un labyrinthe mécanique (5).

4. Système de commutation selon la revendication 1, **caractérisé en ce que** l'entrefer est formé entre l'élément, le boîtier (11) et/ou l'élément d'actionnement (2) d'une part et un conducteur (9) mis à la terre à l'intérieur du boîtier (11) d'autre part.

5. Système de commutation selon la revendication 4, **caractérisé en ce que** le conducteur (9) est relié à une carte à circuits imprimés (8) du système de commutation.

6. Système de commutation électrique selon la revendication 1, **caractérisé en ce que** le dispositif de protection contre les décharges électrostatiques est formé par un élément métallique ou métallisé sur une surface du système de commutation (4), auquel est associé le branchement à la terre (7) via l'entrefer.

7. Système de commutation selon la revendication 6, **caractérisé en ce que** l'élément métallique ou métallisé est une bague (3) et contient en particulier du chrome.

8. Système de commutation selon la revendication 7, **caractérisé en ce que** la bague (3) est réalisée comme une bague décorative qui entoure un élément d'actionnement (2) du système de commutation (4).

9. Système de commutation selon l'une des revendications 1 à 8, **caractérisé en ce que** le branchement à la terre (7) est réalisé par un branchement de la bague (3), du boîtier (11) et/ou de l'élément d'actionnement (2) et/ou du conducteur (9) à une borne de masse d'une batterie du véhicule automobile, en particulier via la carrosserie ou des composants métalliques similaires.

10. Système de commutation selon l'une des revendications 1 à 8, **caractérisé en ce que** le branchement à la terre est réalisé par un branchement de la bague (3), du boîtier (11) et/ou de l'élément d'actionnement (2) et/ou du conducteur (9) à des composants électriques, en particulier des diodes et/ou des transistors.

11. Système de commutation électrique selon l'une des revendications 1 à 10, **caractérisé en ce que** le système de commutation électrique (4) est réalisé sous la forme d'un levier de commutation (1) d'un commutateur monté sur la colonne de direction.
